# EUROPÄISCHE PATENTSCHRIFT

(11) **EP 2 675 705 B1**
(45) Veröffentlichungstag und Bekanntmachung des Hinweises auf die Patenterteilung: **11.01.2017**
(21) Anmeldenummer: 12700650.0
(22) Anmeldetag: 12.01.2012
(51) Int. Cl.: B64C 11/18, B64C 11/48

(54) **TRIEBWERK FÜR EIN LUFTFAHRZEUG MIT GEGENLÄUFIGEN PROPELLERN**
AIRCRAFT ENGINE WITH COUNTER-ROTATING PROPELLERS
AUTOPROPULSEUR D'AÉRONEF À HELICES CONTRAROTATIVES

(30) Priorität: 17.02.2011 DE 102011011489
(43) Veröffentlichungstag der Anmeldung: 25.12.2013
(73) Patentinhaber: Airbus Defence and Space GmbH, 85521 Ottobrunn (DE)
(72) Erfinder: BAUER, Michael, 85551 Kirchheim b. München (DE); PONGRATZ, Reinhard, 82024 Taufkirchen (DE); REDMANN, Daniel, 85567 Grafing b. München (DE)
(74) Vertreter: Kastel, Stefan
(86) Internationale Anmeldenummer: PCT/EP2012/050443
(87) Internationale Veröffentlichungsnummer: WO 2012/110267

(56) Entgegenhaltungen:
- EP-A1- 0 652 367
- WO-A2-2010/086338
- DE-A1-102008 002 849
- DE-A1-102009 035 689
- FR-A1- 2 866 931
- FR-A1- 2 935 349
- US-A- 3 853 428
- US-A- 4 726 548

## Beschreibung

Die Erfindung betrifft ein Triebwerk für ein Luftfahrzeug mit wenigstens einem in Reiseflugrichtung vorne anzuordnenden vorderen Propeller mit vorderen Propellerblättern und wenigstens einem in Flugrichtung hinter dem vorderen Propeller anzuordnenden hinteren Propeller mit hinteren Propellerblättern, wobei der vordere und der hintere Propeller zur gegenläufigen Drehung ausgebildet sind.

Insbesondere bezieht sich die Erfindung auf solche Triebwerke, die als CROR-(Counter-Rotating Open Rotor-)Antrieb bezeichnet werden, sowie auf ein solches CROR-Triebwerk. Bei derartigen Triebwerken werden zwei offene Rotoren gegenläufig um eine in Flugrichtung ausgerichtete Rotorachse angetrieben.

Die Erfindung bezieht sich weiter bevorzugt auf Turboprop-Triebwerke mit wenigstens zwei hintereinander angeordneten Propellern. Turboprop-Triebwerke mit einem oder mehreren Propellern haben einen besseren energetischen Wirkungsgrad als Turbofan-Triebwerke, die einen vollständig innerhalb einer Triebwerksummantelung aufgenommenen Fan aufweisen. Jedoch werden die meisten der derzeit bestehenden Luftfahrzeuge durch solche Turbofan-Triebwerke angetrieben, die einerseits einen relativ hohen Treibstoffverbrauch und andererseits relativ große umweltschädliche Emissionen in der Atmosphäre verursachen. Zum Zwecke der Energieeinsparung und der Verringerung der Umweltverschmutzung wäre es daher vorteilhafter, Luftfahrzeuge mit Turboprop-Triebwerken als mit Turbofan-Triebwerken auszustatten. Besonders große Wirkungsgrade erzielen Turboprop-Triebwerke in CROR-Konfiguration, wie sie oben beschrieben wird.

Beispiele für CROR-Triebwerke und Propellerblätter dafür finden sich in der US 4,883,240 A, sowie der WO 2010/128240 A2.

Neuere Entwicklungen zeigen, dass mit einer derartigen Art von Triebwerken gegenüber den nun weitläufig verbreiteten Flugzeugtriebwerken Energieeinsparungen von bis zu 30 Prozent erzielt werden können.

Ein Nachteil der Propellertriebwerke ist deren erhöhte oder als unangenehmer empfundene Lärmentwicklung. Es werden daher zurzeit erhöhte Anstrengungen unternommen, den Lärmpegel solcher Propellertriebwerke und insbesondere der als am meisten vorteilhaft empfundenen Turboprop-CROR-Triebwerke geräuschärmer zu gestalten. Eine Maßnahme ist beispielsweise, diese Triebwerke am Heck in Schubanordnung und somit möglichst weit von der Passagierkabine entfernt anzuordnen. Eine solche Anordnung ist bei gegenläufig rotierenden Propellern unter anderem aufgrund der bei gleichem Schub geringer ausbildbaren Propellerdurchmesser möglich und attraktiv.

Maßnahmen zur Geräuschreduzierung von derartigen Triebwerken werden unter anderem in der US 2010/0264264 A1, der WO 2010/086338 A2, der WO 2010/093531 A1 beschrieben und erläutert. Eine Einrichtung zur Einstellung von Anstellwinkeln der Propellerblätter derartiger Maschinen wird in der WO 2010/097440 A1 beschrieben.

In der US 2010/0054913 A1 ist ein eingangs genanntes (CROR-)Triebwerk beschrieben. Die vorderen Propellerblätter sind mit Einlassöffnungen und Auslassöffnungen versehen, die durch einen Hohlraum mit den Einlassöffnungen verbundenen sind. Durch das Ausstoßen der in die Einlassöffnungen eingesaugten Luft aus den Auslassöffnungen werden die Stromlinien der vorderen Propellerblätter derart verwirbelt, dass diese nicht mehr auf die hinteren Propellerblätter treffen. Dadurch wird der Lärm des Triebwerks reduziert.

DE 10 2009 035 689 A1 offenbart ein Triebwerk nach dem Oberbegriff des Anspruchs 1, dessen hintere Propellerblätter Schallabsorber aufweisen.

Die US 4,726,548 A offenbart ein perforiertes aerodynamisches Profil. Die Luftgrenzschicht wird durch Öffnungen and der Vorderkante des Profils in das Profil gesaugt und an dessen Hinterkante wieder ausgestoßen.

Auf dem Gebiet der Windräder ist aus der EP 0 652 367 A1 ist eine Lärmverringerung für eine Windräder bekannt. Zum Verringern der Lärmbelästigung, die durch Drehen der Rotorblätter entsteht, ist an der Hinterkante jedes Rotorblattes eine sägezahnförmige Verzahnung vorgesehen.

Die aerodynamische Situation für eine CROR-Konfiguration ist sehr komplex. Insbesondere bei der Schubanordnung arbeitet der vordere Propeller in der Nachlaufströmung des Triebwerkmastes, was zu einem sehr unregelmäßigen einkommenden Strömungsaufwind auf die Propellerblätter führt. Der zweite Propeller dreht sich in dem hoch vermischten Strömungswirbel des vorderen Propellers und der Triebwerksmast-Nachlaufströmung. Dies führt zu einer im Vergleich zu einem einzelnen Propeller erhöhten Geräuscherzeugung von zusätzlichen tonalen Komponenten höherer Niveaus.

Aufgabe der Erfindung ist es, derartige Wechselwirkungstöne und breitbandigen Lärm zu reduzieren und so zu einer akzeptablen Geräuschcharakteristik solcher zukunftsträchtiger Triebwerkskonfigurationen beizutragen, die wegen ihrer hohen Energieeinsparungsmöglichkeiten bevorzugt werden.

Diese Aufgabe wird durch ein Triebwerk nach Anspruch 1 gelöst.

Vorteilhafte Ausgestaltungen der Erfindung sind Gegenstand der Unteransprüche.

Die Erfindung schafft ein Triebwerk für ein Luftfahrzeug mit wenigstens einem in Reiseflugrichtung vorne anzuordnenden vorderen Propeller mit vorderen Propellerblättern und wenigstens einem in Reiseflugrichtung hinter dem vorderen Propeller anzuordnenden hinteren Propeller mit hinteren Propellerblättern, wobei der vordere und der hintere Propeller zur gegenläufigen Drehung ausgebildet sind, wobei wenigstens eines der vorderen Propellerblätter an dem Hinterkantenbereich eine Verzahnung zur Verringerung von Verwirbelungen hinter dem mit dem Propellerblatt versehenen Propeller aufweist, wobei die gesamte Oberfläche oder wenigstens ein Oberflächenbereich wenigstens eines der hinteren Propellerblätter eine akustisch effektive Oberflächenkompressibilität und/oder eine Druckkompensationseinrichtung und/oder einen Schallabsorber aufweist, wobei die gesamte Oberfläche oder der wenigstens ein Oberflächenbereich porös ausgebildet ist mit ins Innere des Propellerblatts führenden Poren-Öffnungen.

Es ist bevorzugt, dass mehrere, vorzugsweise alle, der vorderen Propellerblätter mit der Verzahnung versehen sind.

Es ist bevorzugt, dass wenigstens eines, vorzugsweise mehrere, am meisten bevorzugt alle der vorderen Propellerblätter an der gesamten Oberfläche oder an wenigstens einem Oberflächenbereich mit der effektiv akustischen Oberflächenkompressibilät und/oder dem Schallabsorber versehen sind.

Es ist bevorzugt, dass mehrere, vorzugsweise alle, der hinteren Propellerblätter mit der effektiv akustischen Oberflächenkompressibilität und/oder dem Schallabsorber ausgebildet sind, vorzugsweise aber nicht mit der Verzahnung ausgebildet sind.

Es ist bevorzugt, dass die Druckkompensationseinrichtung bzw. der Schallabsorber wenigstens einen inneren Hohlraum im Inneren des Propellerblatts aufweist, der mit der Propellerblatt-Oberfläche druckübertragend und/oder druckausgleichend verbunden ist.

Es ist bevorzugt, dass der innere Hohlraum mit der porösen Oberfläche über Poren-Öffnungen in Fluidverbindung steht.

Es ist bevorzugt, dass zwei oder mehr Hohlräume zur Druckkompensation vorgesehen sind, vorzugsweise derart, dass die mehreren Hohlräume aerodynamisch einander entsprechen oder unterschiedlich ausgebildet sind.

Es ist bevorzugt, dass die Poren-Öffnungen
- gleich ausgebildet sind oder in der Größe variieren,
- über einen der Kantenbereiche, insbesondere den Vorderkantenbereich, verteilt ausgebildet sind,
- über die Länge des Propellerblattes verteilt sind,
und/oder
- über die Breite des Propellerblattes verteilt sind.

Es ist bevorzugt, dass der Vorderkantenbereich mit dem eine akustisch effektiv wirkenden Oberflächenkompressibilität wirkenden Oberflächenbereich und/oder dem Schallabsorber versehen ist.

Nachfolgend sind Vorteile eines solchen Triebwerks aufgeführt. Die Vorteile müssen nicht gleichzeitig in jedem Ausführungsbeispiel des Triebwerks verwirklicht sein.

Mit einer akustisch wirksam kompressiblen oder akustisch wirksam elastischen Oberflächenstruktur lassen sich Druckamplituden bei sich ändernden Druckbelastungen auf die Propelleroberfläche dämpfen und reduzieren. Dadurch wird die Enstehung von Schall durch solche Druckspitzen direkt an der Schallquelle bekämpft.

Eine Reduktion von Druckspitzen an der Propelleroberfläche wird insbesondere durch das Vorsehen eines Schallabsorbers erreicht. Schallabsorber werden normalerweise dazu verwendet, bereits entstandene Schallwellen zu dämpfen oder zu absorbieren, um so die Schallausbreitung zu vermeiden. Sie werden beispielsweise im Bereich von Schallwänden oder in Räumen eingesetzt, um die dort auftretenden Schallwellen aus anderen Schallquellen zu dämpfen. Schallabsorber werden entsprechend ihrer Funktionsweise in folgende Gruppen unterteilt:
- poröse Absorber
- Resonanzabsorber und
- Kombinationen aus beiden.
Bei porösen Absorbern wird die Schallenergie durch Reibung der Luftmoleküle in Wärme umgewandelt. Die Resonanzabsorber gehören zu den Schallabsorbern und bestehen im wesentlichen aus einer schwingenden Masse und einer Feder. Die auftreffende Schallenergie wird in kinetische Energie der Masse umgewandelt. Beispielsweise ist ein Hohlraum vorgesehen, dessen eingeschlossenes Medium (z.B. Luft) als Feder wirkt. Als Masse kann die den Hohlraum von der Oberfläche trennende Begrenzung dienen oder auch ein sich in einer Verbindungsöffnung befindliches Medium (z.B. Luft). Bei der Erfindung werden die Schallabsorber nicht zu Dämpfung bereits entstandener Schallwellen eingesetzt, sondern vielmehr zur Dämpfung von Oberflächendruckbelastungen, um so eine Erzeugung von Schallwellen durch diese Druckbelastungen unmittelbar an der Schallquelle zu vermeiden. Hierzu kann es wie bei den Schallabsorbern in der Raumakustik sinnvoll sein, die Dämmwirkung auf einen bestimmten Frequenzbereich hin zu optimieren. Z.B. wird ein Schallabsorber vorgesehen, dessen Nenn-Absorptions-Frequenzbereich auf den möglichen Drehzahlbereich des Propellers abgestimmt ist.

Beispielsweise ist die Oberfläche akustisch weich ausgebildet; in bevorzugter Ausgestaltung weist die Druckkompensationseinrichtung wenigstens einen inneren Hohlraum im Inneren des Propellerblattes auf, der mit der Propellerblatt-Oberfläche druckübertragend und/oder -ausgleichend verbunden ist.

Diese Verbindung kann beispielsweise über die Poren-Öffnungen der Maßnahme a1) geschehen; es wäre aber alternativ oder zusätzlich auch möglich, dass das Propellerblatt bereichsweise derart elastisch ausgebildet ist, dass sich Teile der Oberfläche bei Druckänderungen in den Hohlraum hinein ausweichend bewegen können. Beispielsweise könnten zwischen dem Hohlraum und der Oberfläche verteilt vorgesehene Membrane ausgebildet sein, die sich bei Druckschwankungen nach innen zu dem Hohlraum oder nach außen zu der Oberfläche wölben.

Vorzugsweise wird die mechanische Steifheit der Propellerblattoberfläche möglichst hoch gehalten, um das Flügelprofil des Propellers beizubehalten und damit das Leistungsvermögen des Propellers nicht zu beeinträchtigen. Die dann lediglich akustisch wirksame Oberflächenkompressibilität wird z.B. durch verteilte Poren oder verteilte Bereiche geringerer Steifigkeit, z.B. Membrane oder dergleichen, erreicht, während der verbleibende Großteil der Propellerblattoberfläche steif bleibt.

Der innere Hohlraum kann unterschiedlich ausgebildet sein, es könnte beispielsweise ein einzelner langgestreckter Hohlraum entlang des Vorderkantenbereichs ausgebildet sein. Es kann aber auch eine Vielzahl von inneren Hohlräumen zur Druckkompensation vorgesehen sein. Diese Hohlräume können entsprechend zueinander ausgebildet sein, so dass sie die gleichen aerodynamischen Eigenschaften aufweisen, oder sie könnten je nach Anpassung an die an unterschiedlichen Oberflächenbereichen des Propellerblattes auftretenden möglichen Druckschwankungen aerodynamisch unterschiedliche Eigenschaften aufweisen und/oder unterschiedlich ausgebildet oder verteilt sein. Auch möglich ist, dass mehrere Hohlräume untereinander in Fluidverbindung stehen. Auch könnten durch Hohlräume Resonanzfrequenzen eingestellt werden, wo Druckschwankungen besonders wirksam gedämpft werden. Die Resonanzfrequenzen könnten je nach Betriebsbedingungen des Propellers (insbesondere Drehzahl) eingestellt werden.

Bezüglich der Porenöffnungen kann vorgesehen sein, dass die Poren-Öffnungen gleich ausgebildet sind oder in der Größe variieren, über einen der Kantenbereiche, insbesondere den Vorderkantenbereich verteilt ausgebildet sind, über die Länge des Propellerblattes verteilt sind, und/oder über die Breite des Propellerblattes verteilt sind.

Besonders bevorzugt ist ein Vorderkantenbereich mit der akustisch effektiv wirksamen Oberflächenkompressibilität versehen, da in diesem Vorderkantenbereich zunächst die Druckschwankungen auftreten können. Es kann aber auch vorgesehen sein, dass die gesamte Propellerblattoberfläche mit entsprechenden Schallschutzmaßnahmen ausgebildet ist.

Durch das Vorsehen von Verzahnungen lassen sich Wirbel hinter dem vorderen Propeller beeinflussen, insbesondere reduzieren. Dadurch lässt sich die Wirbelschleppe des vorderen Propellers beeinflussen, um so die tonalen Komponenten durch den in dieser Wirbelschleppe drehenden hinteren Propeller zu beeinflussen und zu reduzieren.

Besonders bevorzugt sind mehrere oder alle der Propellerblätter des vorderen Propellers mit der Verzahnung versehen. Die akustisch effektiv wirksame Oberflächenkompressibilität ist bevorzugt an den Propellerblättern des vorderen Propellers, an den Propellerblättern des hinteren Propellers oder an allen Propellerblättern vorgesehen. Die akustisch effektiv wirksam kompressiblen Oberflächen können an den vorderen Propellerblättern und den hinteren Propellerblättern unterschiedlich ausgebildet sein.

Durch die Erfindung oder deren vorteilhafte Ausgestaltungen wird eine Verwendung der hohen Lärm erzeugenden, aber wesentlich kosteneffizienteren Antriebskonzepte von CROR-Triebwerken ermöglicht. Die durch derzeit bekannte CROR-Konfigurationen erzeugten Lärmpegel sind klar höher als bei modernen Jet-Flugzeugen. Dies würde sicherlich zu schwerwiegenden Problemen während des Geräuschpegel-Zertifizierungs-Prozesses für den interessanten neuen Flugzeugtyp mit CROR-Vortrieb führen. Die Verwendung der Erfindung erleichtert eine weitere Entwicklung solcher neuen Luftfahrzeugtypen.

Der Lärm von CROR-Triebwerken ist höchst störend, was hauptsächlich durch Propellerwechselwirkungstöne verursacht wird. Die Erfindung hat auch Vorteile bei der Verringerung des Innenlärms und verbessert somit den Passagier-Komfort.

Ausführungsbeispiele der Erfindung werden nachfolgend anhand der beigefügten Zeichnungen näher erläutert. Darin zeigt:
- Fig. 1: eine schematische perspektivische Darstellung eines hinteren Bereichs eines Luftfahrzeugs mit einem CROR-Triebwerk gemäß einer Ausführungsform der Erfindung;
- Fig. 2: eine schematische Schnittdarstellung durch ein Propellerblatt eines der Propeller des Triebwerks von Fig. 1;
- Fig. 3: eine vergrößerte Teildarstellung aus Fig. 2 mit einem vergrößerten Vorderkantenbereich des Propellerblatts;
- Fig. 4: einen Graph, welcher den Druck an einer Propellerblattoberfläche über die Zeit bei einem üblichen Propellerblatt und bei einem Propellerblatt gemäß einer Ausführungsform der Erfindung zeigt; und
- Fig. 5: eine vereinfachte schematische Vorderansicht eines Propellers eines Triebwerks zur Verdeutlichung einer weiteren Maßnahme an Propellerblättern zur Geräuschreduktion bei Triebwerken in der Ausbildung von Fig. 1.

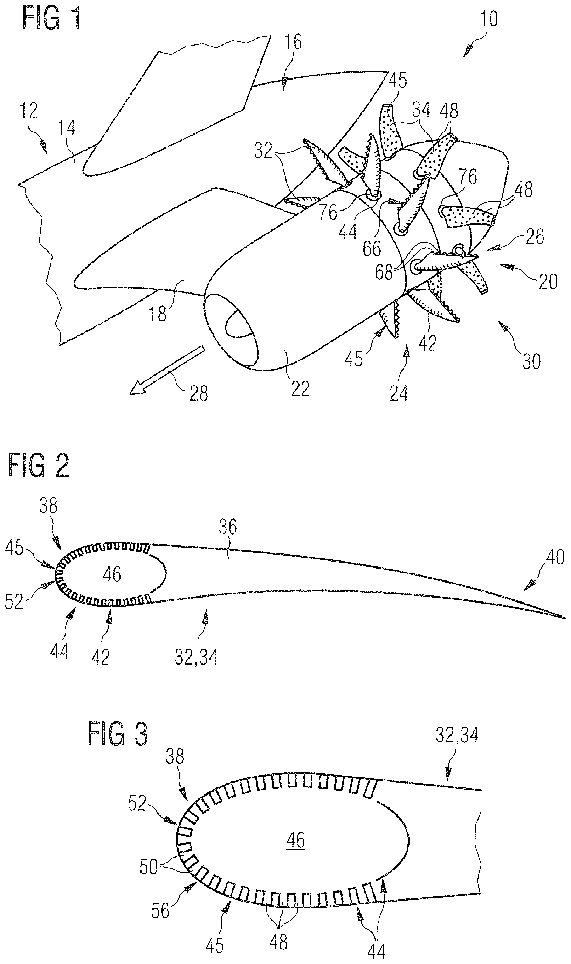

In der Fig. 1 ist ein Triebwerk 10 an einem Luftfahrzeug 12 am Beispiel eines Flugzeuges 14 gezeigt. In der Figur ist nur der Heckbereich 16 des Flugzeuges 14 dargestellt, wo das Triebwerk 10 an einem Triebwerksmast 18 befestigt ist. Das Triebwerk 10 ist als Turboprop-Triebwerk 20 mit einer in einer Nacelle 22 (Triebwerksgehäuse) untergebrachten, nicht näher dargestellten Gasturbine und mehreren offenen Propellern 24, 26 versehen. Beispielsweise sind zwei Propeller, nämlich ein vorderer Propeller 24 und ein hinterer Propeller 26 vorgesehen. Die Propeller 24, 26 sind hintereinander um die gleiche Drehachse drehend angeordnet. Die Drehachse ist im Wesentlichen in Reiseflugrichtung 28 des Flugzeuges 14 ausgerichtet.

Der vordere Propeller 24 und der hintere Propeller 26 werden durch die Gasturbine gegenläufig drehend angetrieben. Propellertriebwerke mit mehreren gegenläufig drehenden offenen Propellern werden auch als CROR-Triebwerke 30 bezeichnet.

Die Propeller 24, 26 befinden sich bezüglich der Reiseflugrichtung 28 gesehen am hinteren Bereich des Triebwerkes 10 und sind als Schubpropeller ausgebildet. Der vordere Propeller 24 weist mehrere vordere Propellerblätter 32 auf. Der hintere Propeller 26 weist mehrere hintere Propellerblätter 34 auf.

Bei der dargestellten CROR-Konfiguration drehen sich die vorderen Propellerblätter 32 im Flug in der Nachlaufströmung des Triebwerksmastes 18. Dadurch werden die vorderen Propellerblätter 32 je nach Drehwinkelstellung unterschiedlich mit Druck beaufschlagt. Außerdem erzeugt der vordere Propeller 24 eine Wirbelströmung, die sich mit der Nachlaufströmung des Triebwerksmastes 18 hoch vermischt. In diesem komplizierten Strömungsfeld drehen sich die hinteren Propellerblätter 34.

Bei herkömmlichen CROR-Triebwerken ergeben sich durch die unterschiedlichen Druckbeaufschlagungen höchst unangenehme Geräuschentwicklungen. Daher sind bei dem hier dargestellten Triebwerk 10 unterschiedliche Propellerblattkonzepte zum Erreichen eines geräuscharmen CROR-getriebenen Luftfahrzeuges 12 vorgesehen, die im Folgenden näher erläutert werden.

Gemäß eines ersten Konzepts wird vorgeschlagen, zumindest einen Teilbereich der Oberfläche von Propellerblättern 32, 34 mit einer akustisch effektiven Oberflächenkompressibilität zu versehen. Zumindest ein Teilbereich der Oberfläche soll akustisch effektiv weicher ausgebildet sein.

Fig. 2 zeigt eine Querschnittsdarstellung durch eines der Propellerblätter 32, 34. Das Propellerblatt 32, 34 weist einen Propellerblattkörper 36 mit einem Vorderkantenbereich 38 und einem Hinterkantenbereich 40 auf.

Bei dem dargestellten Propellerblatt 32, 34 wird im Vorderkantenbereich 38 eine akustisch effektive Oberflächenkompressibilität durch Bereitstellung einer porösen Propellerblattoberfläche 42 und/oder durch eine Druckkompensationseinrichtung 44 zur Reduktion von akustisch wirksamen Oberflächendrucklastvariationen bereitgestellt.

Zur Reduktion der akustisch wirksamen Oberflächendrucklastvariationen ist wenigstens ein Oberflächenbereich mit einem Schallabsorber 45 versehen. Der Schallabsorber 45 kann als poröser Absorber, als Resonanzabsorber mit Hohlraum (Helmholtz-Resonator) oder als Kombination der beiden Absorbertypen vorgesehen sein. Bei dem Beispiel der Fig. 2 und 3 ist ein Kombinations-Schallabsorber mit poröser Oberfläche und mit Hohlraum vorgesehen.

Fig. 3 zeigt eine vergrößerte Detaildarstellung des Vorderkantenbereichs 38. Die Druckkompensationseinrichtung 44 bzw. der Schallabsorber 45 weist einen inneren Hohlraum 46 im Inneren des Propellerblattkörpers 36 auf. Dieser innere Hohlraum 46 ist mit der Oberfläche des Vorderkantenbereichs 38 druckübertragend oder druckausgleichend verbunden.

Die poröse Propellerblattoberfläche 42 weist eine Mehrzahl von über die Propellerblattoberfläche verteilten Porenöffnungen 48 auf, die sich von der Propellerblattoberfläche 42 aus in das Innere des Propellerblattkörpers 36 hinein erstrecken.

Beispielsweise münden die Porenöffnungen 48 in den Hohlraum 46.

Durch die Ausbildung einer porösen Propellerblattoberfläche 42 lässt sich trotz ausreichender Steifheit der Oberfläche eine akustisch effektiv weiche Oberfläche bilden, denn Druckschwankungen können durch Eindringen in die Porenöffnungen und/oder Druckkompensation in dem Hohlraum 46 ausgeglichen werden. Die Figuren 2 und 3 stellen ein Beispiel für eine poröse Propellerblattoberfläche 42 mit einem Detail von kapillaren Adern 50 dar, die zum Bilden der Poren-Öffnungen 48 über den Bereich der Vorderkante 42 des Propellerblatts 32, 34 verteilt werden. Weiter ist der Hohlraum 46 zum Bewirken eines Druckkompensationseffekts vorgesehen.

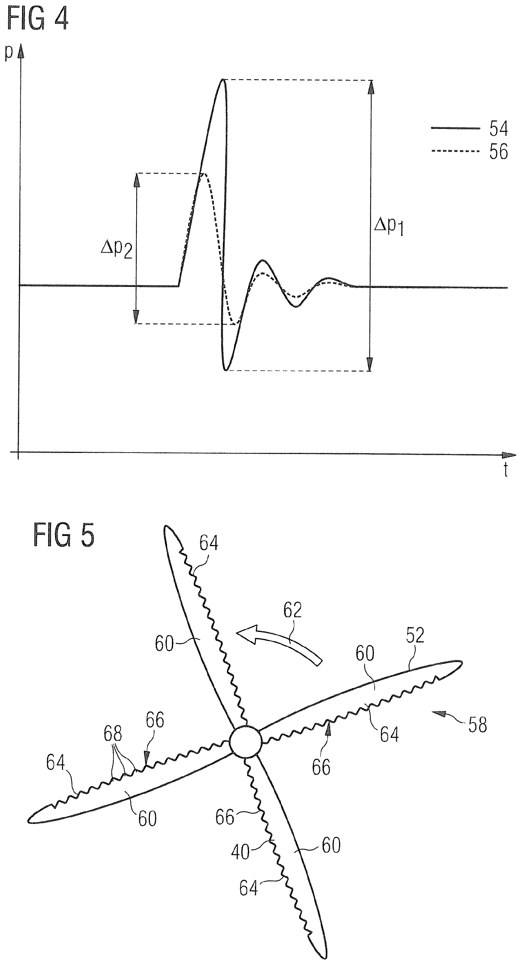

Die Wirkung dieser porösen Oberfläche und/oder der Druckkompensation wird im Folgenden anhand der Darstellung in Fig. 4 näher erläutert.

Fig. 4 stellt einen Graph des Druckes p auf die Propellerblattoberfläche über die Zeit t dar. Die durchgezogene Linie 54 stellt die Kurve für eine durchgängige steife Blattoberfläche eines herkömmlichen Propellerblattes dar, während die gestrichelte Linie 56 die Kurve für eine poröse Blattoberfläche darstellt. In Fig. 4 ist das Prinzip der schwankenden Druckfluktuationen auf das Propellerblatt 32, 34 dargestellt, welches durch die Wechselwirkung zwischen dem vorderen Propeller 24 und dem hinteren Propeller 26 verursacht wird. Die durchgezogene Linie 54 zeigt das Prinzip der Druckfluktuationen in dem Zeitbereich, während die gestrichelte Linie 56 die Druckfluktuationen für das gleiche Propellerblatt 32, 34 und die gleichen Betriebsbedingungen (Drehzahl, usw.), aber bei Vorhandensein einer porösen Oberfläche und/oder bei Verwendung einer adaptiven Anstellwinkel/Verdrehwinkel-Technologie, wie sie im folgenden noch näher erläutert wird, darstellt. Die Reduktion bei den Druckamplituden p₁ und p₂ reduziert in direkter Weise die Lärmabstrahlung von jedem Propellerblatt 32, 34, welche Lärmabstrahlung unmittelbar mit den Propellerblatt-Druckfluktuationen einhergeht.

Die gezeigte Reduktion der akustisch effektiven Oberflächendrucklastvariationen (s. Fig. 4) wird bei dem in den Fig. 2 und 3 skizzierten Maßnahmen durch das Bereitstellen einer akustisch effektiven Oberflächenkompressibilität aufgrund von Oberflächenporösität und/oder aufgrund von Druckkompensation erreicht. Dies führt zu einer akustischen Impedanz und einer akustischen Dämmung, kombiniert mit spezifischen Streueffekten der akustischen Energie.

Die schwankenden Druckfluktuationen p₁ an einem gewöhnlichen Propellerblatt (wie durch die Linie 54 in Fig. 4 dargestellt) ergeben durch Fourier-Transformation in den Frequenzbereich den damit einhergehenden Geräuschdruckpegel L_{p,1}. In analoger Weise ist durch p₂ in Fig. 4 bei der gestrichelten Linie 56 das mit schwankenden Druckfluktuationen beaufschlagte poröse Propellerblatt 32, 34 angegeben. Die hier auftretende Druckfluktuation ist aufgrund der Porösitätseffekte nzw.

Dämmungseffekte kleiner. Der damit einhergehende Schaltdrucklevel L_{p,2} ist ebenfalls tiefer als der Schaltdrucklevel für das Propellerblatt mit der harten Oberfläche. Mit der beschriebenen Propellerblattkonfiguration wird eine breitbandige und tonale Geräuschreduzierung durch die Reduzierung der Steifheit oder Stärke der aeroakustischen Quelle erreicht.

Das beschriebene und in den Fig. 2 und 3 gezeigte passive Lärmreduzierungsverfahren ist für Propellerblätter 32, 34 des hinteren Propellers 26 und/oder des vorderen Propellers 24 der CROR-Konfiguration anwendbar.

Die in den Fig. 2 und 3 gezeigte Konfiguration des Hohlraumes 46 ist nur ein prinzipielles Beispiel. Es kann zwei oder mehre integrierte Hohlräume 46 geben, die sich aerodynamisch entsprechen oder nicht. Die Porösität, d.h. insbesondere die Größe der Poren-Öffnungen 48, kann zu Optimierungszwecken über die Propellerblattoberfläche variieren. Ebenso kann die Dichte der Anordnung der Poren-Öffnungen 48 über die Propellerblattoberfläche variieren. Es kann, wie in den Fig. 2 und 3 dargestellt, nur ein Teilbereich der Propellerblattoberfläche porös ausgebildet sein, oder es kann der gesamte Oberflächenbereich des Propellerblattes 32, 34 porös ausgebildet sein. Die Adern 50 können z.B. nicht nur über die Spannweite des Propellerblattes 32, 34 verteilt sein, sondern auch über die gesamte Propellerblattlänge.

In Fig. 1 ist als Beispiel für mögliche Konfigurationen bei den Propellerblättern 32 der Vorderkantenbereich 38 mit der porösen Propellerblattoberfläche 42 dargestellt, während bei den hinteren Propellerblättern 34 eine Verteilung der Poren-Öffnungen 48 über die Propellerblattoberfläche dargestellt ist.

Im Folgenden wird anhand der Darstellung in Fig. 5 noch ein weiteres Konzept zur Geräuschreduzierung von CROR-Triebwerken 30 der in Fig. 1 dargestellten Art näher erläutert. Fig. 5 zeigt eine Prinzipdarstellung eines einfachen vier-blättrigen Propellers 58 mit vier Propellerblättern 60, deren bezüglich der Drehrichtung 62 gesehen hintere Kante 64 mit Verzahnungen 66 versehen sind. Die Anzahl, die Position und Form der einzelnen Zähne 68 hängen von der Geometrie des Propellers 58 und seinen Betriebsbedingungen ab.

Auch dieses zweite Konzept ist bei der in Fig. 1 dargestellten Ausführungsform eines CROR-Triebwerks 30 verwirklicht. Gemäß Fig. 1 sind die vorderen Propellerblätter 32 an deren Hinterkantenbereichen 40 mit den Verzahnungen 66 versehen.

Die Verzahnungen 66 an den Hinterkanten 64 der vorderen Propellerblätter 32 reduzieren die Verwirbelung hinter dem vorderen Propeller 24. Dies stellt eine Primärmaßnahme zur Reduzierung von Druckfluktuationen bei Auftreffen des reduzierten Wirbelfeldes auf das hintere Propellerblatt 34 dar. Dadurch wird die Intensität der Geräuscherzeugung durch Wechselwirkung reduziert.

Durch die Anwendung der vorher erwähnten Konzepte wird die Verwendung des hohen Lärm erzeugenden, aber höchst kosteneffizienten Antriebskonzepts gegenläufig rotierender offener Rotoren (CROR) ermöglicht. Die durch derzeitige CROR-Konfigurationen erzeugten Geräuschpegel sind klar höher als bei modernen Jet-Flugzeugen. Dies würde sicherlich zu schwerwiegenden Problemen während der Geräuschzertifizierungsprozesse für diesen neuen Flugzeugtyp führen. Verwendet man jedoch die vorgestellten Konzepte, macht dies die weitere Entwicklung dieses neuen und interessanten Flugzeugtypes wesentlich leichter.

Der Lärm von CROR-Triebwerken ist hoch störend, was hauptsächlich durch die Töne der Propellerwechselwirkung verursacht wird. Die vorgestellten Konzepte haben auch Einfluss auf das Innengeräusch des Luftfahrzeuges 12 und sorgen so für einen besseren Passagierkomfort.

### Bezugszeichenliste

- 10: Triebwerk
- 12: Luftfahrzeug
- 14: Flugzeug
- 16: Heckbereich
- 18: Triebwerksmast
- 20: Turboprop
- 22: Nacelle
- 24: vorderer Propeller
- 26: hinterer Propeller
- 28: Reiseflugrichtung
- 30: CROR-Triebwerk
- 32: vorderes Propellerblatt
- 34: hinteres Propellerblatt
- 36: Propellerblattkörper
- 38: Vorderkantenbereich
- 40: Hinterkantenbereich
- 42: poröse Propellerblattoberfläche
- 44: Druckkompensationseinrichtung
- 45: Schallabsorber
- 46: Hohlraum
- 48: Poren-Öffnungen
- 50: Adern
- 52: vordere Kante
- 54: steife Blattoberfläche
- 56: poröse Blattoberfläche
- 58: Propeller
- 60: Propellerblatt
- 62: Drehrichtung
- 64: hintere Kante
- 66: Verzahnungen
- 68: Zähne
- p: Druck auf Propelleroberfläche
- t: Zeit

## Patentansprüche

1. Triebwerk (10, 20, 30) für ein Luftfahrzeug (12) mit wenigstens einem in Reiseflugrichtung (28) vorne anzuordnenden vorderen Propeller (24) mit vorderen Propellerblättern (32) und wenigstens einem in Reiseflugrichtung (28) hinter dem vorderen Propeller (24) anzuordnenden hinteren Propeller (26) mit hinteren Propellerblättern (32), wobei der vordere und der hintere Propeller (24, 26) zur gegenläufigen Drehung ausgebildet sind, wobei wenigstens eines der vorderen Propellerblätter (32) an dem Hinterkantenbereich (40) eine Verzahnung (66) zur Verringerung von Verwirbelungen hinter dem mit dem Propellerblatt (32) versehenen Propeller (24) aufweist, wobei die gesamte Oberfläche oder wenigstens ein Oberflächenbereich wenigstens eines der hinteren Propellerblätter (34) eine akustisch effektive Oberflächenkompressibilität und/oder eine Druckkompensationseinrichtung (44) und/oder einen Schallabsorber (45) aufweist, **dadurch gekennzeichnet, dass** die gesamte Oberfläche oder der Oberflächenbereich porös ausgebildet ist mit ins Innere des Propellerblatts (32, 34) führenden Poren-Öffnungen (48).

2. Triebwerk nach Anspruch 1, **dadurch gekennzeichnet, dass** mehrere, vorzugsweise alle, der vorderen Propellerblätter (32) mit der Verzahnung (66) versehen sind.

3. Triebwerk nach Anspruch 1 oder 2, **dadurch gekennzeichnet, dass** wenigstens eines, vorzugsweise mehrere, am meisten bevorzugt alle der vorderen Propellerblätter (32) an der gesamten Oberfläche oder an wenigstens einem Oberflächenbereich mit der effektiv akustischen Oberflächenkompressibilät und/oder dem Schallabsorber (45) versehen sind.

4. Triebwerk nach einem der Ansprüche 1 bis 3, **dadurch gekennzeichnet, dass** mehrere, vorzugsweise alle, der hinteren Propellerblätter (34) mit der effektiv akustischen Oberflächenkompressibilität und/oder dem Schallabsorber (45) ausgebildet sind, vorzugsweise aber nicht mit der Verzahnung (66) ausgebildet sind.

5. Triebwerk nach einem der Ansprüche 1 bis 4, **dadurch gekennzeichnet, dass** die Druckkompensationseinrichtung (44) bzw. der Schallabsorber (45) wenigstens einen inneren Hohlraum (46) im Inneren des Propellerblatts (32, 34) aufweist, der mit der Propellerblatt-Oberfläche (42) druckübertragend und/oder druckausgleichend verbunden ist, wobei der innere Hohlraum (46) mit der porösen Oberfläche (42) über Poren-Öffnungen (48) in Fluidverbindung steht.

6. Triebwerk nach Anspruch 5, **dadurch gekennzeichnet, dass** zwei oder mehr Hohlräume (46) zur Druckkompensation vorgesehen sind, vorzugsweise derart, dass die mehreren Hohlräume aerodynamisch einander entsprechen oder unterschiedlich ausgebildet sind.

7. Triebwerk nach einem der Ansprüche 1 bis 6, **dadurch gekennzeichnet, dass** die Poren-Öffnungen (48)
• gleich ausgebildet sind oder in der Größe variieren,
• über einen der Kantenbereiche (38, 40), insbesondere den Vorderkantenbereich (38), verteilt ausgebildet sind,
• über die Länge des Propellerblattes (32, 34) verteilt sind,
und/oder
• über die Breite des Propellerblattes (32, 34) verteilt sind.

8. Triebwerk nach einem der voranstehenden Ansprüche, **dadurch gekennzeichnet, dass** der Vorderkantenbereich (38) mit dem eine akustisch effektiv wirkenden Oberflächenkompressibilität aufweisenden Oberflächenbereich und/oder dem Schallabsorber (45) versehen ist.

## Claims

1. An engine (10, 20, 30) for an aircraft (12), comprising at least one front propeller (24) with front propeller blades (32) that is to be disposed at the front in the cruising direction (28) and at least one rear propeller (26) with rear propeller blades (32) that is to be disposed behind the front propeller (24) in the cruising direction (28), wherein the front and rear propellers (24, 26) are configured for counter-directional rotation, wherein at least one of the front propeller blades (32) has at the rear edge region (40) a toothing (66) for reducing turbulences behind the propeller (24) provided with the propeller blade (32), wherein the entire surface or at least a portion of the surface of at least one of the rear propeller blades (34) has an acoustically effective surface compressibility and/or a pressure compensation device (44) and/or a sound absorber (45), **characterized in that** the entire surface or the portion of the surface are configured to be porous, with pore openings (48) leading into the inside of the propeller blade (32, 34).

2. The engine according to claim 1, **characterized in that** several, preferably all, of the front propeller blades (32) are provided with the toothing (66).

3. The engine according to claim 1 or 2, **characterized in that** at least one, preferably several, most preferably all, of the front propeller blades (32) are provided with the acoustically effective surface compressibility and/or the sound absorber (45) on the entire surface or on at least a portion of the surface.

4. The engine according to any one of the claims 1 to 3, **characterized in that** several, preferably all, of the rear propeller blades (34) are configured with the acoustically effective surface compressibility and/or the sound absorber (45), but preferably not with the toothing (66).

5. The engine according to any one of the claims 1 to 4, **characterized in that** the pressure compensation device (44) or the sound absorber (45) has at least one internal cavity (46) on the inside of the propeller blade (32, 34) that is connected in a pressure-transmitting and/or pressure-compensating manner to the propeller blade surface (42), the internal cavity (46) being in fluid communication with the porous surface (42) via pore openings (48).

6. The engine according to claim 5, **characterized in that** two or more cavities (46) are provided for pressure compensation, preferably in such a way that, aerodynamically, the several cavities correspond to each other or are configured in different ways.

7. The engine according to any one of the claims 1 to 6, **characterized in that** the pore openings (48)
• are configured identically or vary in size,
• are configured distributed over one of the edge regions (38, 40), particularly the front edge region (38),
• are distributed over the length of the propeller blade (32, 34),
and/or
• are distributed over the width of the propeller blade (32, 34).

8. The engine according to any one of the preceding claims, **characterized in that** the front edge region (38) is provided with the portion of the surface having an acoustically effectively acting surface compressibility, and/or with the sound absorber (45).

## Revendications

1. Groupe motopropulseur (10, 20, 30) pour un aéronef (12) comprenant au moins une hélice avant (24), à agencer à l'avant dans une direction de vol (28), avec des pales d'hélice avant (32), et au moins une hélice arrière (26), à agencer derrière l'hélice avant (24) en direction de vol (24), avec des pales d'hélice arrière (32), dans lequel l'hélice avant et l'hélice arrière (24, 26) sont réalisées en vue d'une rotation en sens contraires, dans lequel l'une au moins des pales d'hélice avant (32) comporte dans la région du bord de fuite (40) une denture (66) pour la réduction de turbulences derrière l'hélice (24) pourvue de la pale d'hélice (32), dans lequel la totalité de la surface, ou bien au moins une zone de surface de l'une au moins des pales d'hélice arrière (34), comporte une compressibilité de surface efficace sur le plan acoustique et/ou un moyen de compensation de pression (44) et/ou un absorbeur de bruit (45), **caractérisé en ce que** la totalité de la surface ou la zone de surface est réalisée poreuse avec des ouvertures de pores (48) qui mènent jusqu'à l'intérieur de la pale d'hélice (32, 34).

2. Groupe motopropulseur selon la revendication 1, **caractérisé en ce que** plusieurs, et de préférence toutes, les pales d'hélice avant (32) sont pourvues de la denture (66).

3. Groupe motopropulseur selon la revendication 1 ou 2, **caractérisé en ce que** l'une au moins, de préférence plusieurs, et de la manière la plus préférée toutes les pales d'hélice avant (32) sont pourvues sur la totalité de la surface ou sur au moins une zone de surface, de la compressibilité de surface efficace sur le plan acoustique et/ou de l'absorbeur de bruit (45).

4. Groupe motopropulseur selon l'une des revendications 1 à 3, **caractérisé en ce que** plusieurs, et de préférence toutes, les pales d'hélice arrière (34) sont réalisées avec la compressibilité de surface efficace sur le plan acoustique et/ou avec l'absorbeur de bruit (45), mais ne sont de préférence pas toutes réalisées avec la denture (66).

5. Groupe motopropulseur selon l'une des revendications 1 à 4, **caractérisé en ce que** le moyen de compensation de pression (44) ou respectivement l'absorbeur de bruit (45) comporte au moins une cavité intérieure (46) à l'intérieur de la pale d'hélice (32, 34), qui est reliée avec la surface (44) de la pale d'hélice de manière à transmettre et/ou égaliser les pressions, et dans lequel la cavité intérieure (46) est en liaison fluidique avec la surface poreuse (42) via des ouvertures de pores (48).

6. Groupe motopropulseur selon la revendication 5, **caractérisé en ce qu'**il est prévu deux ou plusieurs cavités (46) pour la compensation de pression, de préférence de telle façon que lesdites plusieurs cavités sont réalisées sur le plan aérodynamique de façon correspondante les unes avec les autres ou de façon différente.

7. Groupe motopropulseur selon l'une des revendications 1 à 6, **caractérisé en ce que** les ouvertures de pores (48)
- sont réalisées de façon identique ou sont de taille variable,
- sont réalisées de manière répartie sur l'une des zones de bord (38, 40), en particulier la zone de bord d'attaque (38),
- sont réparties sur la longueur de la pale d'hélice (32, 34), et/ou
- sont réparties sur la largeur de la pale d'hélice (32, 34).

8. Groupe motopropulseur selon l'une des revendications précédentes, **caractérisé en ce que** la zone du bord d'attaque (38) est pourvue de la zone de surface présentant une compressibilité de surface efficace sur le plan acoustique et/ou de l'absorbeur de bruit (45).
